# EUROPÄISCHE PATENTSCHRIFT

(11) **EP 3 089 076 B1**
(45) Veröffentlichungstag und Bekanntmachung des Hinweises auf die Patenterteilung: **28.05.2025**
(21) Anmeldenummer: 16000798.5
(22) Anmeldetag: 07.04.2016
(51) Int. Cl.: G06V 10/20

(54) **VERFAHREN ZUM AUSRICHTEN EINER WIRKMITTELEINHEIT AUF EIN ZIELOBJEKT**
METHOD FOR ALIGNING AN AGENT UNIT ON A TARGET OBJECT
PROCEDE D'ALIGNEMENT D'UNE UNITE D'AGENT ACTIF SUR UN OBJET CIBLE

(30) Priorität: 17.04.2015 DE 102015004936
(43) Veröffentlichungstag der Anmeldung: 02.11.2016
(73) Patentinhaber: Diehl Defence GmbH & Co. KG, 88662 ÜBERLINGEN (DE)
(72) Erfinder: Kushauer, Jörg, DE - 88693 Deggenhausertal (DE); Gagel, Florian, DE - 88690 Uhldingen-Mühlhofen (DE)
(74) Vertreter: Diehl Patentabteilung

(56) Entgegenhaltungen:
- EP-A1- 2 518 432
- EP-A2- 0 899 585
- EP-A2- 0 899 587
- EP-A2- 0 922 968
- EP-B1- 1 314 950
- CN-A- 103 093 193
- DE-A1- 102010 020 798
- GB-A- 2 501 684
- KR-B1- 101 288 388
- US-A1- 2010 092 033
- US-A1- 2011 063 446
- US-A1- 2014 110 482
- US-B2- 11 619 469
- US-B2- 7 210 392
- GRAY GREER J ET AL: "Feature-based tracking algorithms for imaging infrared anti-ship missiles", TECHNOLOGIES FOR OPTICAL COUNTERMEASURES VIII, SPIE, 1000 20TH ST. BELLINGHAM WA 98225-6705 USA, vol. 8187, no. 1, 6 October 2011 (2011-10-06), pages 1 - 15, XP060020182, DOI: 10.1117/12.897284

## Beschreibung

Die Erfindung betrifft ein Verfahren zum Ausrichten einer Wirkmitteleinheit auf ein Zielobjekt, bei dem ein Zielbild des Zielobjekts erstellt wird, aus dem Zielbild charakteristische Bildmerkmale des Zielobjekts ermittelt werden und die Wirkmitteleinheit unter Verwendung der charakteristischen Bildmerkmale auf das Zielobjekt ausgerichtet wird.

Aus der US 2011/063446 A1 ist ein System mit mehreren Kameras zur Detektion, Verfolgung und Erkennung von Charakteristika von Gesichtern, von Nummernschildern etc. bekannt. Über eine Weitwinkelkamera wird ein Video-Feed bereitgestellt. Die aufgenommenen Bilder erlauben dabei eine Detektion und Verfolgung interessierender Objekte. Anhand des Ortes der Objekte wird eine Spiegeleinrichtung zur Ausrichtung des Gesichtsfelds einer Teleobjektivkamera der Reihe nach auf jedes detektierte, verfolgte Objekt ausgerichtet. Zur Detektion eines Objekts in einem Bild können dabei Bildverarbeitungsalgorithmen wie bspw. SIFT zum Einsatz kommen. Die US 2010/092033 A1 beschäftigt sich mit einem Verfahren zur Geo-Referenzierung eines Ziels zwischen zwei Subsystemen eines Zielsystems. Am Ort eines Sender-Subsystems wird ein Zielbild aufgenommen, es werden Zieldeskriptoren für einen ausgewählten Teil des Zielbilds erzeugt und Informationen über Ort des Ziels und Zieldeskriptoren an ein Empfänger-Subsystem gesandt. Darauf gestützt wird die optische Achse einer Kamera des Empfänger-Subsystems ausgerichtet, ein zweiter Teil eines von dieser Kamera aufgenommen Zielbilds identifiziert, der mit dem ersten Teil des Zielbilds vom Sender-Subsystem korreliert ist. Druckschrift DE 10 2010 020 798 A1 beschäftigt sich mit der Vermeidung der Beschädigung von Freundfahrzeugen bei Beschuss mit Submunition, welche von einer Munition, wie bspw. einem Artilleriegeschoss ausgestoßen wird.

Druckschrift "Feature-based tracking algorithms for imaging infrared anti-ship missiles" bei GRAY GREER J ET AL: ,TECHNOLOGIES FOR OPTICAL COUNTERMEASURES VIII, SPIE, 1000 20TH ST. BELLINGHAM WA 98225-6705 USA, Bd. 8187, Nr. 1, 6. Oktober 2011, beschäftigt sich mit merkmalsbasierten Tracking-Algorithmen, wie beispielsweise SIFT, für Anti-Schiff-Flugkörpe.

Zur Störung oder Zerstörung von Elementen eines Luftfahrzeugs ist es bekannt, einen Hochenergielaser auf das Luftfahrzeug zu richten und beispielsweise eine Optik zu stören oder Komponenten zu zerstören. Hierzu muss der Laser einer Bewegung des Luftfahrzeugs nachgeführt werden, um an der gewünschten Stelle die zur Störung bzw. Zerstörung notwendige Energie zu deponieren. Um einen hohen Energieeintrag pro Fläche am Luftfahrzeug zu erreichen, muss der Laserstrahl gebündelt auf das Luftfahrzeug gerichtet werden. Er bestrahlt somit nur eine kleine Fläche am Luftfahrzeug, auf die er zudem beim Nachführen der Bewegung ausgerichtet bleiben muss, um genügend Energie permanent in diese Fläche einzubringen.

Es ist eine Aufgabe der Erfindung, ein Verfahren zum Ausrichten einer Wirkmitteleinheit auf ein Zielobjekt anzugeben, mit der die Wirkmitteleinheit präzise auf das Zielobjekt ausrichtet werden kann.

Diese Aufgabe wird durch ein Verfahren gemäß den Merkmalen von Patentanspruch 1 gelöst, bei dem als charakteristische Bildmerkmale Zielschlüsselpunkte im Zielbild ermittelt werden und insbesondere zu jedem Zielschlüsselpunkt zumindest ein mehrdimensionaler Zieldeskriptor. Die Wirkmitteleinheit kann nun unter Verwendung der Positionen der Zielschlüsselpunkte auf das Ziel ausgerichtet werden. Durch die Ermittlung der Zielschlüsselpunkte im Zielbild des Zielobjekts kann eine Position des Zielobjekts im Zielbild sehr exakt bestimmt werden. Entsprechend kann die Wirkmitteleinheit sehr exakt auf einen gewünschten Punkt am Zielobjekt ausgerichtet werden.

Die Positionen der Zielschlüsselpunkte können Richtungen sein, in denen sich die Zielschlüsselpunkte relativ zu einer Referenzrichtung, beispielsweise zu einer momentanen Ausrichtung der Wirkmitteleinheit, befinden.

Die Wirkmitteleinheit kann eine Lasereinheit, ein Geschütz, ein Flugkörper mit einem Wirkmittelteil oder dergleichen sein und umfasst zweckmäßigerweise eine Optik, durch die das Zielbild aufgenommen wird. Weiter umfasst sie zweckmäßigerweise einen Wirkmittelsender, durch den die am Zielobjekt zu deponierende Energie ausgesendet wird. Der Wirkmittelsender umfasst eine Optik durch die beispielsweise ein Laserstrahl auf das Zielobjekt gerichtet wird. Die Aufnahmeoptik um Aufnehmen des Zielbilds und die Sendeoptik können die gleiche Optik sein, sodass Aufnahmestrahlen und ausgesendete Strahlen durch die gleichen optischen Elemente geführt werden. Es ist auch möglich, die beiden Optiken voneinander zu trennen, insbesondere in ihrer Bewegung zueinander, sodass die Sendeoptik beispielsweise sehr präzise einer Bewegung des Zielobjekts nachgeführt wird und die Aufnahmeoptik hiervon abgekoppelt bewegt werden kann. Weiter umfasst Wirkmitteleinheit vorteilhafterweise eine Steuereinheit zum Steuern von Elementen der Wirkmitteleinheit, beispielsweise einem Ausrichtantrieb zum Ausrichten des Wirkmittelsenders auf das Zielobjekt und zweckmäßigerweise zum Ermitteln der charakteristischen Bildmerkmale, also der Schlüsselpunkte im Zielbild und insbesondere die mehrdimensionalen Zieldeskriptoren.

Die Zielschlüsselpunkte werden mit einem Merkmalsdetektor aus dem Zielbild ermittelt werden. Ein Merkmalsdetektor ist in der Lage, Punkte in einem Bild zu finden, die das Bild charakterisieren. Ein guter Merkmalsdetektor ist auch bei einer Skalierung, Rotation, bei einer geometrischen Transformation und Beleuchtungsveränderungen des aufgenommenen Zielobjekts in der Lage, die gleichen Zielschlüsselpunkte in den erneut aufgenommenen Bild des Zielobjekts zu finden.

Es sind eine Reihe von geeigneten Merkmalsdetektoren bekannt, wie beispielsweise der SIFT-Merkmalsdetektor (Scale-Invariant Feature Transform), der SURF-Merkmalsdetektor (Speeded Up Robust Features), der ORB-Merkmalsdetektor (Oriented Fast and Rotated Brief), sowie weitere Verfahren. Das SIFT-Verfahren und der SIFT-Merkmalsdetektor sind beispielsweise beschrieben in Lowe, David G.: Object recognition from local scale-invariant features; Computer vision, 1999; The proceedings of the seventh IEEE international conference on Bd. 2 leee, 1999, S. 1150-1157, und in Lowe, David G.: Distinctive image features from scale-invariant keypoints; International journal of computer vision 60 (2004), Nr. 2, S. 91-110. Das SURF-Verfahren mit dem SURF-Merkmalsdetektor ist beispielsweise beschrieben in Bay, Herbert; Tuytelaars, Tinne; Van Gool, Luc: Surf: Speeded up robust features; Computer Vision-ECCV 2006. Springer, 2006, S. 404-417. Und das ORB-Verfahren mit dem ORB-Merkmalsdetektor ist beispielsweise beschrieben in Rublee, Ethan; Rabaud, Vincent; Konolige, Kurt; Bradski, Gary: ORB: an efficient alternative to SIFT or SURF. In: Computer Vision (ICCV), 2011 IEEE International Conference on IEEE, 2011, S. 2564-2571. Andere bekannte Verfahren für eine Merkmalsfindung und einen automatischen Merkmalsvergleich sind beispielsweise Laplacian of Gaussian (LoG), sowie Normalized Cross-Correlation Function (NCCF). Es können aber auch andere Verfahren verwendet werden, die für einen automatischen Vergleich von Schlüsselpunkten bzw. Deskriptoren geeignet erscheinen.

Vor der Ermittlung der Schlüsselpunkte kann das Zielbild, aus dem die Schlüsselpunkte gewonnen werden sollen, mit einem Gauß-Filter geglättet werden, um es von Bildrauschen zu bereinigen. Nach dem Ermitteln der Schlüsselpunkte können diese in einem weiteren Verfahrensschritt auf ihre Robustheit untersucht werden, wobei letztendlich zweckmäßigerweise nur solche Schlüsselpunkte ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierung/en zugewiesen wird, basierend auf den Orientierungen der umliegenden Bildgradienten. Zukünftige Berechnungen beziehungsweise Vergleiche können nun auf der Grundlage von Bilddaten durchgeführt werden, die relativ zu den zugewiesenen Orientierungen, und insbesondere auch Skalierungen und Positionierungen, transformiert wurden, um Invarianz für eben diese Transformationen zu gewährleisten.

Aus den so gefundenen Schlüsselpunkten werden nun die Deskriptoren ermittelt werden. Hierzu werden die den Schlüsselpunkt umgebenden Bildgradienten ermittelt, die in einem mehrdimensionalen Merkmalsvektor zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, so dass der Schlüsselpunkt im Deskriptor enthalten ist.

Ein nachfolgender Vergleich der Zieldeskriptoren aus dem Zielbild mit zuvor ermittelten Referenzdeskriptoren erfolgt mit einem geeigneten Algorithmus, beispielsweise dem Random Sample Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt. Dies kann jedoch bei Bildern, in denen sich gewisse Objekte wiederholen, zu mehrdeutigen Ergebnissen führen. In der Praxis kann deshalb ein Distanzquotient verwendet werden, wobei der beste Match, also der kleinste Abstand, durch den zweitbesten Match geteilt wird. Sehr ähnlichen Ergebnissen kann nun eine kleinere Wahrscheinlichkeit zugeordnet werden, dass der gefundene Match korrekt ist. Beim SIFT-Verfahren können k-d Trees oder andere Suchbäume verwendet werden. Für den Brief-Merkmalsdetektor aus dem ORB-Verfahren kann die Hamming-Distanz der Bit Strings der Deskriptoren verwendet werden. Um die Suche der nächsten Nachbarn zu optimieren, kann auch Locality Sensitive Haching verwendet werden, sodass ähnliche Bit Strings so gehacht werden, dass sie mit großer Wahrscheinlichkeit in denselben Baskets landen.

Beispielhaft wird im Folgenden der SIFT-Merkmalsdetektor ausführlicher beschrieben. Von dem der Analyse zu unterziehenden Bild werden unterschiedlich stark verschwommene Kopien des Bilds erstellt, indem ein Gauß-Filter mehrfach mit zunehmender Stärke auf das Bild angewendet wird oder der gleichbleibende Gauß-Filter immer wieder auf das letzte gefilterte Bild angewendet wird. In der Verschwimmungsskala nebeneinander liegende Bilder werden nun voneinander subtrahiert, was als Difference of Gaussian (DoG) bezeichnet wird. Die unterschiedlich stark verschwommenen Kopien des Bilds und die DoG-Bilder bilden zusammen eine Oktave. Da der Gauß-Filter kontrastreiche Regionen im Bild stark verändert, führt eine Subtraktion der Bilder dazu, dass solche Stellen, an denen sich die Bilder stark verändert haben, also kontrastreiche Regionen, wie Kanten und Ecken, gefunden werden. Die Schlüsselpunkte können nun, wie in der oben angegebenen Veröffentlichung von Lowe aus dem Jahr 2004 vorgeschlagen, gefunden werden. Hierbei werden Schlüsselpunkte, die in einer Fläche liegen und deren Gradienten insofern klein sind, ausgeschieden. Liegt der Schlüsselpunkt auf einer Kante, so ist der Gradient senkrecht zur Kante groß und der Gradient parallel zur Kante klein. Auch solche Schlüsselpunkte werden entfernt. Ein auf einer Ecke liegender Schlüsselpunkt beinhaltet zwei orthogonale und große Gradienten. Solche Schlüsselpunkte sind besonders robust und sollten beibehalten werden.

Da hierbei nur scharfe Konturen im Ausgangsbild gefunden werden, nicht jedoch ebenfalls signifikante weichere Konturen, wird nun - oder bereits vor der Berechnung der Schlüsselpunkte - eine nächsthöhere Oktave gebildet, indem beispielsweise von dem verschwommensten Bild nur jeder zweite Pixel verwendet wird oder das Ausgangsbild verpixelt wird. In einer nächsthöheren Oktave bzw. Bildoktave weist das der Erstellung der Deskriptoren zugrunde liegende Bild also eine niedrigere Auflösung auf als das Bild der niedrigeren Oktave. Die niedrigere Auflösung kann geschaffen werden, indem z.B. je eine Gruppe von Pixeln, insbesondere 2 Pixel oder n x n Pixel, beispielsweise 2 x 2 Pixel, zu einem Pixel zusammengefasst werden, z.B. durch Addition, Mittelwertbildung oder Herausnehmen von nur einem Pixel aus der Gruppe. In dieser zweiten Oktave werden nun wiederum die Schlüsselpunkte bestimmt. Die Schlüsselpunkte umfassen neben ihren x- und y-Koordinaten auch einen Skalenfaktor, also die Angabe der Oktave, aus der sie stammen. Auf diese Weise wird dem Bild des Zielobjekts eine Vielzahl von Schlüsselpunkten zugewiesen. Die den Schlüsselpunkten zugeordneten bzw. die Schlüsselpunkte enthaltenden Deskriptoren enthalten also zweckmäßigerweise auch die Angabe der Oktave, also den Skalenfaktor.

Um die Wirkmitteleinheit auf das Zielobjekt ausrichten zu können, ist das Zielobjekt als solches zu erkennen. Hierfür bestehen u. a. zwei Möglichkeiten. Das Zielobjekt, ein gleiches Objekt oder ein ähnliches Objekt wurden zu einem früheren Zeitpunkt aufgenommen und es wurde ein Referenzbild vom Zielobjekt erstellt. Die aufnehmende Einheit kann die Wirkmitteleinheit oder eine andere Einheit sein. Aus dem Referenzbild wurden Referenzschlüsselpunkte und mehrdimensionale Referenzdeskriptoren ermittelt. Soll das Zielobjekt als solches erkannt werden, können die Zieldeskriptoren aus dem Zielbild mit den Referenzdeskriptoren aus dem Referenzbild verglichen werden. Bei einem Vergleich bzw. einer Korrelation oberhalb eines vorgegebenen Schwellwerts gilt das Zielobjekt als erkannt. Auf diese Weise kann eine automatische Objekterkennung durchgeführt werden.

Das Referenzbild wird in einer Datenbank abgespeichert sein. In diese werden mehrere Bilder gespeichert sein, in der das Zielobjekt oder ein gleiches oder ähnliches Objekt in mehreren Perspektiven abgebildet ist. Auch Bilder weiterer, zum Zielobjekt unähnliche Objekte können in der Datenbank hinterlegt sein. Generell ist es ausreichend, wenn anstelle der Bilder die Referenzdeskriptoren gespeichert sind, so dass in diesem Zusammenhang unter einem abgespeicherten Bild auch nur die daraus ermittelten Deskriptoren und ggf. Schlüsselpunkte, falls diese nicht bereits Teil der Deskriptoren sind, verstanden werden kann. Bei Vorhandensein von Bildern mehrerer unähnlicher Objekte in der Datenbank kann durch eine Bild- bzw. Deskriptorvergleich eine automatische Identifizierung des Zielobjekts erfolgen.

Eine weitere Möglichkeit zum Erkennen des Zielobjekts als solches besteht darin, dass ein früheres Zielbild als Referenzbild verwendet wird. So nimmt beispielsweise ein Bediener ein Zielbild auf, in dem das Zielobjekt sichtbar ist. Die Aufnahme kann mit der Wirkmitteleinheit erfolgen. In diesem Zielbild wir nun das Zielobjekt durch den Bediener oder automatisiert markiert. Dies kann durch das Legen eines Zielbereichs um das Zielobjekt im Zielbild geschehen. Aus diesem Zielbild bzw. Zielbereich werden nun Referenzdeskriptoren ermittelt und abgespeichert. Zur Verringerung von Rechenzeit ist es vorteilhaft, wenn ein Zielbereich des Zielbilds ausgewählt wird, in dem das Zielobjekt zumindest teilweise abgebildet ist, wobei die Referenzdeskriptoren ausschließlich aus dem ausgewählten Bereich extrahiert werden. Nicht für die Korrelation notwendige Bildbereiche werden außer Acht gelassen, sodass die Korrelation beschleunigt werden kann.

Um eine zuverlässige Vergleichbarkeit der Zieldeskriptoren mit den Referenzdeskriptoren zu erreichen, ist es zweckmäßig, wenn die Zieldeskriptoren mit dem gleichen Verfahren gewonnen wurden, wie die Referenzdeskriptoren. Bei einem Vergleich der Deskriptoren gilt eine Korrelation bzw. ein Vergleich von zwei Deskriptoren als erfolgreich, wenn die Ähnlichkeit der Deskriptoren über einem vorbestimmten Vergleichswert liegt. Im Zielbild kann nun der Schlüsselpunkt, der zu einer erfolgreichen Korrelation mit dem Schlüsselpunkt des Referenzbilds geführt hat, als Korrelationspunkt gekennzeichnet werden. Der Korrelationspunkt ist identisch mit seinem Schlüsselpunkt im Zielbild und ihm ist ein Schlüsselpunkt im Referenzbild zugeordnet, zu dem aus dessen Referenzdeskriptor Daten übernommen werden können.

Einzelne Korrelationspunkte im Zielbild können auch fehlerhaft sein, sodass zufällig ähnliche Schlüsselpunkte im Zielbild und Referenzbild vorliegen und zu einer erfolgreichen Punktkorrelation führen. Eine Klassifizierung des Zielobjekts als erkannt sollte daher zweckmäßigerweise erst dann erfolgen, wenn eine genügende Anzahl von Korrelationspunkten im Zielbild gefunden wurde. Die Anzahl kann vorher festgelegt sein, beispielsweise in einem vorbestimmten Zusammenhang mit Bildparametern des Zielbilds. Erst bei so erfolgter und erfolgreicher Korrelation des Zielbilds mit dem Referenzbild gilt das Zielobjekt als solches als erkannt.

Insofern ist es zur Ausrichtung der Wirkmitteleinheit auf das Zielobjekt vorteilhaft, wenn die Zieldeskriptoren mit aus einem Referenzbild gewonnen Referenzdeskriptoren verglichen werden und das Zielobjekt bei einem Vergleichsergebnis oberhalb einem Grenzwert als erkannt klassifiziert wird.

In einer weiteren vorteilhaften Ausführungsform der Erfindung wird eine Abfolge von Zielbildern erstellt, aus denen jeweils die Zielschlüsselpunkte ermittelt werden. Die Zielschlüsselpunkte können nun in der Abfolge der Zielbilder verfolgt werden und die Wirkmitteleinheit kann entsprechend einer Bewegung der Zielschlüsselpunkte, beispielsweise durch einen Bildbereich bzw. durch eine Landschaft, nachgeführt werden. Während der Ausrichtung der Wirkmitteleinheit auf das Zielobjekt werden zweckmäßigerweise fortwährend neue Zielbilder aufgenommen und diese werden mit dem oder den Referenzbildern korreliert. Die Bildaufnahme der Zielbilder erfolgt beispielsweise in einer festgelegten Zeittaktung, wie in regelmäßigen Zeitabständen, oder abhängig von Flug- bzw. Bewegungsparametern des Zielobjekts. Jedes der aufgenommenen Zielbilder wird mit dem Referenzbild korreliert oder es werden aus der Gesamtheit der aufgenommenen Zielbilder nach einem vorbestimmten Algorithmus die zur Korrelation heranzuziehenden Zielbilder ausgewählt, beispielsweise jedes n-te Bild, wobei n eine ganzzahlige Zahl ist.

Insbesondere bei der Deponierung von Laserenergie im Zielobjekt ist es vorteilhaft, gezielt eine schwache Struktur anzustrahlen, die durch die Laserenergie beeinflussbar ist. Hierbei kann es vorkommen, dass eine Zielstruktur, im Folgenden als Zielpunkt bezeichnet, arm an charakteristischen Bildmerkmalen ist, sodass sie nicht von sich aus in einfacher Weise im Zielbild detektierbar ist. Der Zielpunkt kann insofern frei von einem Schlüsselpunkt sein. Um dennoch genügend Energie in einem gewünschten Zielpunkt am Zielobjekt deponieren zu können, ist erfindungsgemäß vorgesehen, dass der Zielpunkt auf dem Zielobjekt in seiner Position relativ zu Zielschlüsselpunkten ermittelt wird und die Wirkmitteleinheit auf den Zielpunkt ausgerichtet wird.

Der Zielpunkt kann beispielsweise durch einen Bediener oder automatisiert festgelegt werden. Hierbei wird der Zielpunkt zweckmäßigerweise relativ zu Schlüsselpunkten des Referenzbilds festgelegt, insbesondere relativ zu deren Lage. Solche Referenzschlüsselpunkte können besonders gekennzeichnet werden. Erfolgt nun eine erfolgreiche Korrelation mit einer ausreichenden Anzahl von besonders gekennzeichneten Referenzschlüsselpunkten, so kann die Lage des Zielpunkts auch im Zielbild festgestellt werden, da jedem Referenzschlüsselpunkt auch ein Zielschlüsselpunkt zugeordnet ist. Die Wirkmitteleinheit kann nun punktgenau auf den Zielpunkt ausgerichtet werden, sodass beispielsweise eine vorteilhafte Wirkung dort erreicht werden kann. Die Lage des Zielpunkts kann als Koordinaten des Punkts, eine örtliche Lage im aufgenommenen Zielbild und/oder eine Richtung des Punkts absolut oder relativ beispielsweise zu einer Ausrichtung einer beobachtenden bzw. aufnehmenden Optik sein.

Der Zielpunkt ist relativ zu Referenzschlüsselpunkten eines Referenzbilds festgelegt. Die Zielschlüsselpunkte im Zielbild werden anhand eines Vergleichs von Zieldeskriptoren mit Referenzdeskriptoren den Referenzschlüsselpunkten zugeordnet werden und der Zielpunkt wird relativ zu den Zielschlüsselpunkten festgelegt werden. Die verwendeten Referenzschlüsselpunkte und insbesondere auch die Zielschlüsselpunkte werden als mit dem Zielpunkt verbunden bzw. diesem zugeordnet gekennzeichnet.

Die Wirkmitteleinheit kann eine Optik umfassen, die auf das Zielobjekt ausgerichtet wird. Die Optik kann eine Suchkopfoptik eines Flugkörpers sein, der unter Verwendung der Ausrichtung der Optik auf das Ziel zu gesteuert wird. Eine Flugbewegung des Zielobjekts kann durch die Optik nachverfolgt werden und der Flugkörper kann das Zielobjekt verfolgen. Die Optik ist eine Laseroptik ist und ein Laserstrahl auf das Zielobjekt gerichtet wird, durch einen Wirkmittelsender. Laserenergie kann gezielt am Zielobjekt deponiert werden, sodass das Zielobjekt verändert wird.

Insbesondere bei schnell bewegten Zielobjekten kann es vorkommen, dass die Rechenzeit zum Vergleich der Deskriptoren dazu führt, dass die Ausrichtung der Wirkmitteleinheit zu langsam ist und das Zielobjekt sich bei erfolgter Ausrichtung bereits ein Stück weit in Bewegungsrichtung weiterbewegt hat. Die Wirkmittelenergie wird nun unpräzise oder falsch deponiert. Um dies zu vermeiden, ist es vorteilhaft, wenn eine zukünftige Position bzw. eine Richtung eines Zielpunkts am Zielobjekt aus der bereits erfolgten Bewegung des Zielobjekts errechnet wird. Dies kann beispielsweise durch eine Interpolation geschehen, die aus einer in der Vergangenheit erfolgten Bewegungsgeschwindigkeit und Bewegungsrichtung auf eine in der Zukunft erfolgende Bewegungsgeschwindigkeit und Bewegungsrichtung schließt. Die Bewegung des Zielobjekts, also dessen Bewegungsgeschwindigkeit und Bewegungsrichtung, kann aus einer Bewegung des Zielobjekts in einem Rahmen mehrerer Zielbilder und/oder einem Rahmenabgriff einer dem Zielobjekt nachgeführten Optik ermittelt werden.

Zweckmäßigerweise wird eine zukünftige Position des Zielpunkts mithilfe eines Kalmanfilters bestimmt. Der Kalmanfilter kann beispielsweise beim Tracking als Trackingfilter verwendet werden, mit dem Bewegungsparameter des Beobachtungsobjekts, in diesem Fall des Zielobjekts, geschätzt werden.

Zweckmäßigerweise werden zukünftige Positionen der in Zielbildern erkannten Zielschlüsselpunkte mithilfe eines Kalmanfilters bestimmt. Vorteilhafterweise wird aus diesen zukünftigen Positionen eine zukünftige Position des Zielpunkts bestimmt. Durch das Bestimmen der mehreren Positionen der Zielschlüsselpunkte ist dieser Rechenweg weniger fehleranfällig als das direkte Fortschreiben der Zielpunktposition mithilfe des Kalmanfilters.

Ist das Zielobjekt ein vorbeifliegendes oder vorbeifahrendes Fahrzeug, so dreht sich die Perspektive auf das vorbeifliegende bzw. vorbeifahrende Zielobjekt. Es kann daher sein, dass das momentane Zielbild das Zielobjekt aus einer anderen Perspektive zeigt als das Referenzbild. Auch wenn der Vergleich von Deskriptoren in gewissem Umfang rotationsinvariant ist, so können Perspektivänderungen von mehr als 45° zu Fehlerkennungen führen, sodass das Zielobjekt nicht mehr korrekt erkannt wird. Um dies zu vermeiden, wird in einer weiteren vorteilhaften Ausführungsform der Erfindung vorgeschlagen, dass Referenzdeskriptoren vorliegen, die aus mehreren, aus verschiedenen Richtungen aufgenommenen Referenzbildern des Zielobjekts gewonnen wurden. Beispielsweise wurden die Referenzdeskriptoren aus einem Referenzbild des Zielobjekts von vorne, einem Referenzbild des Zielobjekts schräg von vorne, von der Seite, schräg von hinten und von hinten gewonnen, also aus fünf Referenzbildern, die das Zielobjekt aus verschiedenen Perspektiven zeigen. Bei einem Perspektivwechsel wird der Deskriptorenvergleich stets mit Referenzdeskriptoren von zumindest einem Referenzbild erfolgreich sein. Zweckmäßigerweise werden die Referenzschlüsselpunkte, insbesondere ausschließlich die Referenzschlüsselpunkte, desjenigen Referenzbilds, das das beste Vergleichsergebnis liefert, zum Ausrichten der Wirkmitteleinheit verwendet.

Je mehr Referenzbilder bzw. deren Referenzdeskriptoren vorliegen, desto höher ist die Rechenzeit für den Deskriptorenvergleich. Um die Rechenzeit gering zu halten, wird vorgeschlagen, dass den mehreren Referenzbildern eine Bildreihenfolge zugeordnet ist und nur maximal zwei Referenzbilder bzw. die daraus gewonnenen Referenzdeskriptoren für den Deskriptorenvergleich herangezogen werden. Die beiden Referenzbilder liegen insbesondere in der Bildreihenfolge nebeneinander. Zweckmäßigerweise wird das Referenzbild mit dem zuvor besten Korrelationsergebnis und das in der Bildreihenfolge nächstfolgende Referenzbild bzw. deren Deskriptoren ausschließlich verwendet.

Außerdem ist die Erfindung gerichtet auf eine Wirkmitteleinheit entsprechend den Merkmalen von Patentanspruch 9 mit einer Optik, einem Wirkmittelsender, einem Ausrichtungsantrieb und einer Steuereinheit, die dazu vorbereitet ist, aus einem Zielbild des Zielobjekts charakteristische Bildmerkmale des Zielobjekts zu ermitteln und den Ausrichtungsantrieb unter Verwendung der charakteristischen Bildmerkmale so zu steuern, dass der Wirkmittelsender auf das Zielobjekt ausgerichtet wird.

Es wird vorgeschlagen, dass die Steuereinheit erfindungsgemäß dazu vorbereitet ist, als charakteristische Bildmerkmale Zielschlüsselpunkte im Zielbild zu ermitteln und zu jedem Zielschlüsselpunkt zumindest einen mehrdimensionalen Zieldeskriptor zu ermitteln. Weiter wird vorgeschlagen, dass die Steuereinheit dazu vorbereitet ist, den Wirkmittelsender unter Verwendung der Positionen der Zielschlüsselpunkte auf das Zielobjekt auszurichten und einen Zielpunkt auf dem Zielobjekt relativ zu den Zielschlüsselpunkten zu ermitteln und den Wirkmittelsender auf den Zielpunkt auszurichten.

Es zeigen:
- FIG 1: ein unbemanntes Luftfahrzeug, das von einer Wirkmitteleinheit als Zielobjekt anvisiert wird,
- FIG 2: ein von der Wirkmitteleinheit erstelltes Zielbild des Zielobjekts, das mit Referenzbildern vom Zielobjekt korreliert wird und
- FIG 3: eine schematische Darstellung von fünf Referenzbildern mit Aufnahmen des Zielobjekts aus unterschiedlichen Perspektiven.

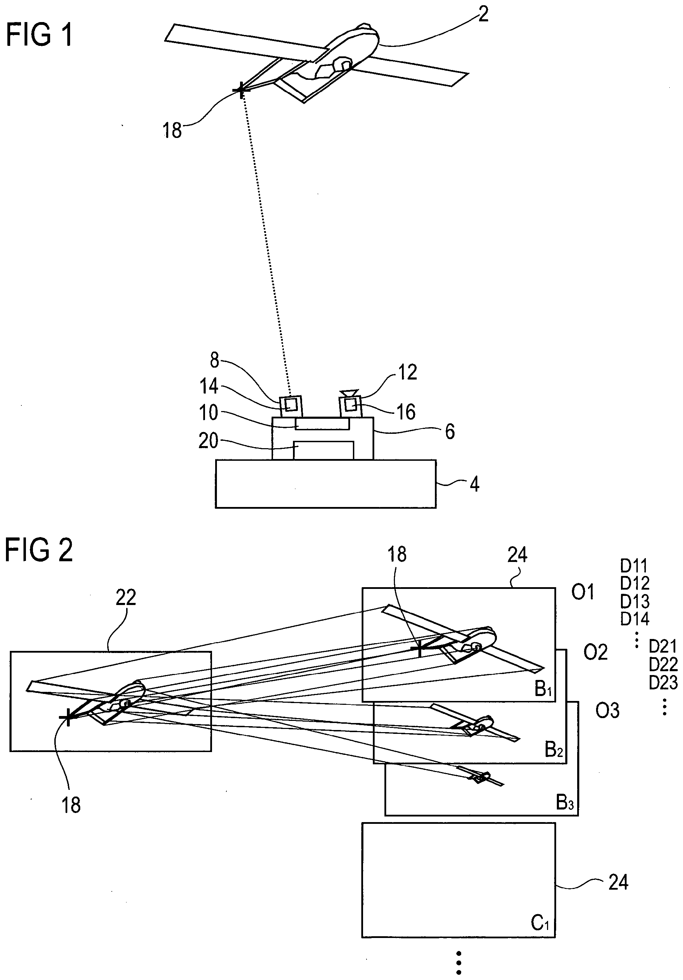

FIG 1 zeigt eine Zielobjekt 2 in Form eines unbemannten Luftfahrzeugs, das schräg über ein Fahrzeug 4 mit einer Wirkmitteleinheit 6 fliegt. Das Fahrzeug 4 kann ein Wasserfahrzeug oder ein Landfahrzeug sein. Die Wirkmitteleinheit 6 ist mit einem Wirkmittelsender 8 ausgestattet, der mit Hilfe eines Ausrichtungsantriebs 10 zweidimensional verschwenkbar ist. Ebenfalls über den Ausrichtungsantrieb 10 zweidimensional und insbesondere synchron mit dem Wirkmittelsender 8 verschwenkbar ist eine Kamera 12. Der Wirkmittelsender 8 ist eine Lasereinheit zum Aussenden eines Laserstrahls. Sowohl der Wirkmittelsender 8 als auch die Kamera 12 weisen jeweils eine Optik 14 beziehungsweise 16 auf, wobei die Optik 14 zum Fokussieren des Laserstrahls auf einen Zielpunkt 18 ausgeführt ist und die Optik 16 als Kameraoptik zum Aufnehmen eines Bilds des Zielobjekts 2 dient.

Eine Steuereinheit 20 der Wirkmitteleinheit 6 dient zur Steuerung der Ausrichtung der Wirkmitteleinheit 6 bzw. des Wirkmittelsenders 8 und der Kamera 12, zum Aufnehmen von Bildern des Zielobjekts 2 mit Hilfe der Kamera 12 und zum Steuern einer Aussendung eines Laserstrahls mit Hilfe des Wirkmittelsenders 8.

Während des Vorbeiflugs des Zielobjekts 2 am Fahrzeug 4 soll dieses durch die Wirkmitteleinheit 6 am Zielpunkt 18 zerstört oder dort in der Weise beeinträchtigt werden, dass ein Weiterflug verhindert wird. Der Zielpunkt ist ein mechanisch labiler Punkt des Zielobjekts 18, an dem eine Einwirkung von Laserstrahlung eine mechanische Zerstörung bewirken kann. Zum Ausrichten der Wirkmitteleinheit 6 auf den Zielpunkt 18 wird das Zielobjekt 2 zu einem ersten Zeitpunkt von der Kamera 12 aufgenommen, und es wird ein Zielbild 22 erstellt, das in FIG 2 beispielhaft dargestellt ist.

FIG 2 zeigt ein Zielbild 22, das mit mehreren Referenzbildern 24 verglichen wird. Die Referenzbilder 24 können ebenfalls von der Wirkmitteleinheit 6 oder durch eine andere Aufnahmeeinheit aufgenommen worden sein. Im ersteren Fall wird das Referenzbild 24 von der Wirkmitteleinheit 6 aufgenommen, und ein Bediener markiert in diesem Bild einen Bildbereich, in dem das Zielobjekt 2 abgebildet ist. Weiter gibt er den Zielpunkt 18 an, auf den der Laser später ausgerichtet werden soll. Die Angabe des Zielpunkts 18 kann beispielsweise durch ein Anklicken eines Bildpunkts auf einer Anzeigeanrichtung sein, auf der das Referenzbild 24 angezeigt wird.

Im letzteren Fall wurden die Referenzbilder 24 bereits früher aufgenommen und liegen in einer Datenbank gespeichert vor. Vor oder beim Anflug des Zielobjekts 2 werden die Referenzbilder 24 bzw. aus den Referenzbildern extrahierte charakteristische Bildmerkmale der Wirkmitteleinheit 6 zugeführt und dort abgespeichert.

Unabhängig von der Art der Herstellung der Referenzbilder 24 werden aus ihnen charakteristische Bildmerkmale in Form von Referenzschlüsselpunkten und Referenzdeskriptoren extrahiert. Diese werden mit Hilfe eines SIFT-Merkmalsdetektors oder eines SURF-Merkmaldetektors aus den Referenzbildern 24 gewonnen. Entsprechend liegen die Referenzdeskriptoren als mehrdimensionale Merkmalsvektoren vor, wie sie entsprechend der beiden genannten Verfahren gewonnen werden. Zum Bildvergleich reicht es aus, wenn anstelle der Referenzbilder 24 nur die Referenzdeskriptoren vorliegen, wobei diese die Referenzschlüsselpunkte als Daten beinhalten können. Das Zielbild 22 wird in gleicher Weise bearbeitet und es werden Zieldeskriptoren extrahiert, die Zielschlüsselpunkte im Zielbild 22 beinhalten.

Um das vorbeifliegende Zielobjekt 2 nachverfolgen zu können, werden die Zieldeskriptoren des Zielbilds 22 mit den Referenzdeskriptoren aus den Referenzbildern 24 verglichen. Ist das Ergebnis eines Vergleichs eines Zieldeskriptors mit einem Referenzdeskriptor über einem Grenzwert, so ist der Vergleich erfolgreich und der betreffende Zielschlüsselpunkt im Zielbild 22 und/oder der betreffende Referenzschlüsselpunkt im Referenzbild 24 werden als Korrelationspunkte gekennzeichnet. In FIG 2 sind einander in den Bildern 22, 24 zugeordnete Korrelationspunkte durch gerade Linien miteinander verbunden. Diese Linien dienen lediglich der Anschauung von einander zugeordneten Schlüsselpunkten. Ist die Korrelation der Bilder erfolgreich, wurden also eine genügende Anzahl von Korrelationspunkten im Zielbild 22 gefunden beziehungsweise mehr Korrelationspunkte als ein Grenzwert, wobei der Grenzwert vorbestimmt ist, so ist die Korrelation erfolgreich und das Zielobjekt 2 kann als solches als erkannt klassifiziert werden.

Einige oder alle der Korrelationsschlüsselpunkte weisen einen positionellen Bezug zum Zielpunkt 18 auf. Sie sind entsprechend gekennzeichnet. Der Zielpunkt 18 selbst ist wegen seiner Bildmerkmalsarmut nicht durch einen Schlüsselpunkt charakterisiert, also schlüsselpunktfrei. Durch die Zuordnung von Zielschlüsselpunkten zu Referenzschlüsselpunkten kann diese Kennzeichnung und die entsprechende Positionsangabe auch den betreffenden Zielschlüsselpunkten im Zielbild 22 zugeordnet werden. Durch die damit vorhandenen Positionsangaben kann der Zielpunkt 18 im Zielbild 22 genau lokalisiert werden, selbst wenn er aus sich heraus nicht erkennbar ist.

Die Ausrichtung der Kamera 12 ist entweder im Raum oder relativ zum Wirkmittelsender 8 bekannt. Entsprechend ist auch die Richtung des Zielpunkts 18 bekannt und der Wirkmittelsender 8 kann auf den Zielpunkt 18 am Zielobjekt 2 ausgerichtet werden. Der Zielpunkt 18 wird mit dem Laserstrahl bestrahlt zum Erzielen des angestrebten Ergebnisses.

Wie oben beispielhaft zum SIFT-Verfahren beschrieben, werden Bildoktaven O1, O2, O3, ..., im Folgenden als Oi bezeichnet, zu dem Referenzbild 24 gebildet. Das Referenzbild 24 bildet hierbei die erste Bildoktave O1, und niedriger aufgelöste Abbildungen des Zielobjekts 2 bilden höhere Bildoktaven O2, O3, ... des Referenzbilds 24. Die Referenzschlüsselpunkte in den höheren Oktaven markieren Bildpunkte mit weicheren Bildstrukturen.

In FIG 2 sind drei Bildoktaven O1, O2, O3 dargestellt. Es ist jedoch möglich und vorteilhaft mehr Bildoktaven zu bilden und aus diesen jeweils die Referenzdeskriptoren zu extrahieren. In gleicher Weise kann auch mit dem Zielbild 22 verfahren werden, so dass auch zu diesem Bildoktaven und zugehörige Zieldeskriptoren erstellt werden. Dies ist jedoch der Übersicht halber in FIG 2 nicht dargestellt.

Aus der ersten Bildoktave O1 werden die Referenzdeskriptoren D1i extrahiert, aus der zweiten Bildoktave O2 die Referenzdeskriptoren D2i, und so weiter. Es können nun alle Zieldeskriptoren mit allen Referenzdeskriptoren Dii verglichen werden, um zu einer erfolgreichen Korrelation zu gelangen.

Während des Vorbeiflugs des Zielobjekts 2 an der Wirkmitteleinheit 6 verändert sich fortlaufend die Perspektive der Sicht der Wirkmitteleinheit 6 auf das Zielobjekt 2. Hierbei verdreht sich die Abbildung des Zielobjekts 2 im Zielbild 22 zu der Abbildung des Zielobjekts 2 im Referenzbild 24. Bei dem in den Figuren 1 und 2 gezeigten Ausführungsbeispiel ist das Zielobjekt 2 schräg von vorne und etwas von unten zu sehen. Ist das Zielobjekt 2 vorbeigeflogen, so wird es von hinten zu sehen sein. Eine Korrelation der Abbildung des Zielobjekts von hinten mit einer Abbildung des Zielobjekts 2 von vorne wird in der Regel nicht zu einer erfolgreichen Korrelation führen können.

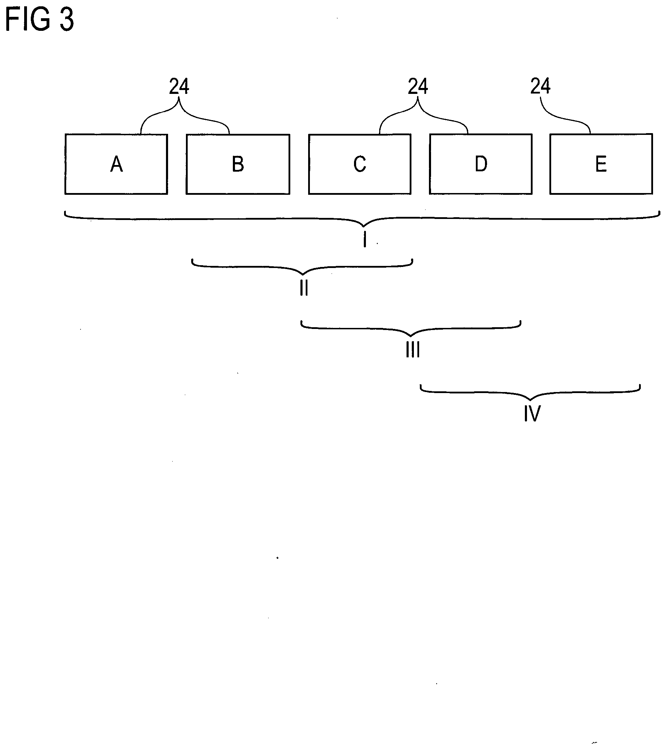

Um das Zielobjekt 2 dennoch lange verfolgen zu können, umfasst die Datenbank Referenzbilder 24 beziehungsweise daraus extrahierte Referenzdeskriptoren Dii zu mehreren Ansichten des Zielobjekts 2. Dies ist beispielhaft in FIG 3 dargestellt.

FIG 3 zeigt schematisch fünf Referenzbilder 24 mit verschiedenen Ansichten A, B, C, D und E vom Zielobjekt 2. Die Ansicht A ist von vorne, die Ansicht B schräg von vorne, die Ansicht C von der Seite, die Ansicht D schräg von hinten und die Ansicht E genau von hinten. Alle Ansichten sind hierbei etwas von unten aufgenommen, so dass die in FIG 1 gezeigte Ansicht in etwa die Ansicht B ist. Bei der in FIG 2 dargestellten Ansicht B handelt es sich um die in FIG 3 dargestellte Ansicht B. Die Oktaven B₂, B₃, ... müssen hierbei nicht als Bilder dargestellt werden, sondern können als Daten gebildet werden, aus denen die Referenzdeskriptoren Dii gebildet werden. In FIG 2 sind die Oktaven lediglich der besseren Anschauung halber als Bilder gezeigt. Entsprechend ist das Bild C₁ aus FIG 2 die Darstellung C aus FIG 3.

Es besteht nun die Möglichkeit, die Zieldeskriptoren mit allen Referenzdeskriptoren Dii aus allen Darstellungen A-E zu korrelieren. Dies ist jedoch mit einigem Rechenaufwand verbunden, der eine gewisse Zeit in Anspruch nimmt. Zur Verringerung der Rechenzeit kann wie folgt vorgegangen werden.

Das erste Zielbild 22 kann mit allen Abbildungen korreliert werden beziehungsweise alle Zieldeskriptoren werden mit den Referenzdeskriptoren aller Abbildungen A-E korreliert. Ebenfalls ist es möglich, die Zieldeskriptoren mit Referenzdeskriptoren mehrerer, einander unähnlicher Objekte zu vergleichen, um automatisiert festzustellen, um welches Zielobjekt 2 es sich gerade handelt. Es kann insofern zunächst eine Zielobjektidentifizierung erfolgen.

Bei dem gezeigten Ausführungsbeispiel wird die erfolgreiche Korrelation nur mit einer oder zwei der Abbildungen A-E zustande kommen, so dass deutlich ist, aus welcher Perspektive das Zielobjekt 2 gerade zu sehen ist. Diese erste Korrelationsphase ist in FIG 3 mit I gekennzeichnet. Beispielhaft sei davon ausgegangen, dass die Korrelation mit Referenzdeskriptoren von dem Referenzbild 24 der Ansicht B erfolgreich war.

Den Ansichten A-E ist eine Reihenfolge gegeben, wie in FIG 3 dargestellt ist. Die Korrelation eines nächstfolgenden Zielbilds 22, das zur Korrelation vorgesehen ist, erfolgt nun nicht mehr mit allen Bildern aller Darstellungen A-E, sondern nur noch mit einer Gruppe von Referenzbildern 24. Diese Gruppe beinhaltet das Referenzbild 24, in der die letzte erfolgreiche Korrelation stattgefunden hat. Außerdem ist es zweckmäßig, wenn die Gruppe das nächstfolgende Bild, in diesem Ausführungsbeispiel das Referenzbild 24 der Perspektive C beinhaltet. Dies ist in FIG 3 durch die Korrelationsphase II angedeutet.

Im Vorbeiflug wird sich nun die Perspektive der Ansicht auf das Zielobjekt ändern, so dass die Korrelation nach einer Weile mit Referenzdeskriptoren des Zielbilds 24 der Ansicht C am erfolgreichsten sein wird. Nun kann die Gruppe der verwendeten Referenzbilder 24 geändert werden, so dass beispielsweise wieder das Korrelationsbild, also das Referenzbild 24 mit der zuletzt erfolgreichen Korrelation, und das nächstfolgende Bild für zukünftige Korrelationen, also Korrelationen mit zukünftigen Zielbildern 22, verwendet wird. Diese Korrelationsphase in FIG 3 mit III gekennzeichnet. Schließlich ist das Zielobjekt 2 von schräg hinten sichtbar und die Korrelationsphase IV beginnt. Liegt die erfolgreiche Korrelation im Referenzbild 24 der Ansicht E, so reicht es aus, nur noch mit diesem Referenzbild 24 zu korrelieren.

Es ist denkbar, dass das Zielobjekt 2 nicht geradlinig fliegt, sondern sich in Bögen oder Kreisen oder anderen Geometrien bewegt. Dann ist es sinnvoll, die Gruppen anders zu besetzten. Hierfür umfasst die Wirkmitteleinheit 6 eine Eingabevorrichtung, auf der ein Bediener einen Bewegungsmodus des Zielobjekts 2 angeben kann. Entsprechend einer Bedienereingabe wird die Gruppe der zu korrelierenden Referenzbilder 24 ausgewählt. Es ist auch möglich, dass die Steuereinheit 20 ein Bewegungsmuster der Bewegung des Zielobjekts 2 selbständig erkennt und die Gruppen dem Bewegungsmuster entsprechend besetzt.

Unter Umständen bewegt sich das Zielobjekt 2 relativ schnell, so dass trotz kurzer Rechenzeit eine Bewegung des Zielpunkts 18 innerhalb der Rechenzeit so groß ist, dass die Ausrichtung der Wirkmitteleinheit 6 auf das Zielobjekt 2 beziehungsweise den Zielpunkt 18 in unerwünschter Weise hinterherläuft. Um dies zu vermeiden, kann eine zukünftige Position des Zielobjekts 2 beziehungsweise Zielpunkts 18 aus vorangegangenen erfolgreichen Korrelationen berechnet werden.

Hierzu wird die Bewegung von Korrelationsschlüsselpunkten im Zielbild 22 mit Hilfe eines Kalman-Filters zu einer oder mehreren zukünftigen Positionen der entsprechenden Korrelationsschlüsselpunkte im Zielbild 22 gebildet. Aus einem Satz zukünftiger Positionen zu einem zukünftigen Zeitpunkt wird - entsprechend der Positionsangaben der Korrelationsschlüsselpunkte relativ zum Zielpunkt 18 - die zukünftige Lage des Zielpunkts 18 zu diesem Zeitpunkt bestimmt. Entsprechend wird die Wirkmitteleinheit 6 beziehungsweise der Wirkmittelsender 8 zu diesem Zeitpunkt in die berechnete Richtung des Zielpunkts 18 ausgerichtet.

### Bezugszeichenliste

- 2: Zielobjekt
- 4: Fahrzeug
- 6: Wirkmitteleinheit
- 8: Wirkmittelsender
- 10: Ausrichtungsantrieb
- 12: Kamera
- 14: Optik
- 16: Optik
- 18: Zielpunkt
- 20: Steuereinheit
- 22: Zielpunkt
- 24: Referenzbild
- A-E: Perspektiven
- D: Referenzdeskriptoren
- O: Bildoktaven

## Patentansprüche

1. Verfahren zum Ausrichten eines Wirkmittelsenders (8) einer Wirkmitteleinheit (6) auf ein Zielobjekt (2), durch welchen eine am Zielobjekt (2) zu deponierende Energie aussendbar ist, bei dem ein Zielbild (22) des Zielobjekts (2) erstellt wird, aus dem Zielbild (22) charakteristische Bildmerkmale des Zielobjekts (2) ermittelt werden und der Wirkmittelsender (8) der Wirkmitteleinheit (6) unter Verwendung der charakteristischen Bildmerkmale auf das Zielobjekt (2) mittels eines von einer Steuereinheit (20) der Wirkmitteleinheit (6) gesteuerten Ausrichtungsantriebs (10) ausgerichtet wird, wobei
- der Wirkmittelsender (8) eine Optik (14) umfasst, durch die ein Laserstrahl auf das Zielobjekt (2) gerichtet wird,
- als charakteristische Bildmerkmale Zielschlüsselpunkte im Zielbild (22) und zu jedem Zielschlüsselpunkte zumindest ein mehrdimensionaler Zieldeskriptor ermittelt wird, und der Wirkmittelsender (8) unter Verwendung der Positionen der Zielschlüsselpunkte auf das Zielobjekt (2) ausgerichtet wird,
- ein Zielpunkt (18) auf dem Zielobjekt (2) relativ zu Zielschlüsselpunkten ermittelt wird und der Wirkmittelsender (8) auf den Zielpunkt (18) ausgerichtet wird, wobei der Zielpunkt (18) relativ zu Referenzschlüsselpunkten eines Referenzbilds (24) des Zielobjekts (2) festgelegt ist, Zielschlüsselpunkte im Zielbild (22) anhand eines Vergleichs von Zieldeskriptoren mit Referenzdeskriptoren den Referenzschlüsselpunkten zugeordnet werden und der Zielpunkt (18) relativ zu den Zielschlüsselpunkten festgelegt wird, und
- Referenzdeskriptoren vorliegen, die aus mehreren, aus verschiedenen Richtungen aufgenommenen Referenzbildern (24) des Zielobjekts (2) gewonnen wurden, und die Referenzschlüsselpunkte desjenigen Referenzbilds (24), das das beste Vergleichsergebnis liefert, zum Ausrichten des Wirkmittelsenders (8) der Wirkmitteleinheit (6) verwendet werden.

2. Verfahren nach Anspruch 1,
wobei die Zieldeskriptoren mit aus einem Referenzbild (24) gewonnenen Referenzdeskriptoren verglichen werden, das Zielobjekt (2) bei einem Vergleichsergebnis oberhalb eines Grenzwerts als erkannt klassifiziert wird und die Wirkmitteleinheit (6) auf das Zielobjekt (2) ausgerichtet wird.

3. Verfahren nach Anspruch 1 oder 2,
wobei eine Abfolge von Zielbildern (22) erstellt wird, aus denen jeweils die Zielschlüsselpunkte ermittelt werden, die Zielschlüsselpunkte in der Abfolge der Zielbilder (22) verfolgt werden und die Wirkmitteleinheit (6) entsprechend einer Bewegung der Zielschlüsselpunkte durch eine Landschaft nachgeführt wird.

4. Verfahren nach einem der vorhergehenden Ansprüche,
wobei eine zukünftige Position eines Zielpunkts (18) am Zielobjekt (2) aus der bereits erfolgten Bewegung des Zielobjekts (2) errechnet wird.

5. Verfahren nach Anspruch 4,
wobei die zukünftige Position des Zielpunkts (18) mithilfe eines Kalmanfilters bestimmt wird.

6. Verfahren nach Anspruch 4 oder 5,
wobei zukünftige Positionen der in Zielbildern (22) erkannten Zielschlüsselpunkte mithilfe eines Kalmanfilters bestimmt werden und aus diesen zukünftigen Positionen eine zukünftige Position des Zielpunkts (18) bestimmt wird.

7. Verfahren nach einem der vorhergehenden Ansprüche,
wobei den mehreren Referenzbildern (24) eine Bildreihenfolge (A-E) zugeordnet ist und für einen Vergleich von Zieldeskriptoren mit Referenzdeskriptoren, die Referenzdeskriptoren von maximal zwei Referenzbildern (24) verwendet werden.

8. Verfahren nach Anspruch 7,
wobei für den Deskriptorenvergleich ausschließlich dasjenige Referenzbild (24) mit dem besten Korrelationsergebnis in der unmittelbar zuvor erfolgten Korrelation und das in der Bildreihenfolge (A-E) nächste Referenzbild (24) verwendet werden.

9. Wirkmitteleinheit (6) mit einer Optik (16), einem Wirkmittelsender (8), durch welchen eine auf einem Zielobjekt (2) deponierbare Energie aussendbar ist und welcher eine Optik (14) umfasst, durch die ein Laserstrahl auf das Zielobjekt (2) richtbar ist,einem Ausrichtungsantrieb (10) und einer Steuereinheit (20), die dazu vorbereitet ist, aus einem Zielbild (22) des Zielobjekts (2) charakteristische Bildmerkmale des Zielobjekts (2) zu ermitteln und den Ausrichtungsantrieb (10) unter Verwendung der charakteristischen Bildmerkmale so zu steuern, dass der Wirkmittelsender (8) auf das Zielobjekt (2) ausgerichtet wird, wobei die Steuereinheit (20) dazu vorbereitet ist,
- als charakteristische Bildmerkmale Zielschlüsselpunkte im Zielbild (22) und zu jedem Zielschlüsselpunkt zumindest einen mehrdimensionalen Zieldeskriptor zu ermitteln und den Wirkmittelsender (8) unter Verwendung der Positionen der Zielschlüsselpunkte auf das Zielobjekt (2) auszurichten,
- einen Zielpunkt (18) auf dem Zielobjekt (2) relativ zu Zielschlüsselpunkten zu ermitteln und den Wirkmittelsender (8) der Wirkmitteleinheit (6) auf den Zielpunkt (18) auszurichten, wobei der Zielpunkt (18) relativ zu Referenzschlüsselpunkten eines Referenzbilds (24) des Zielobjekts (2) festgelegt wird, Zielschlüsselpunkte im Zielbild (22) anhand eines Vergleichs von Zieldeskriptoren mit Referenzdeskriptoren den Referenzschlüsselpunkten zugeordnet werden und der Zielpunkt (18) relativ zu den Zielschlüsselpunkten festgelegt wird, und
- aus mehreren, aus verschiedenen Richtungen aufgenommenen Referenzbildern (24) des Zielobjekts (2), aus denen Referenzdeskriptoren gewonnen wurden und vorliegen, die Referenzschlüsselpunkte desjenigen Referenzbilds (24) zum Ausrichten des Wirkmittelsenders (8) der Wirkmitteleinheit (6) zu verwenden, das das beste Vergleichsergebnis liefert.

## Claims

1. Method for aligning an effector emitter (8) of an effector unit (6) with a target object (2), by means of which effector emitter energy to be deposited at the target object (2) can be emitted, wherein a target image (22) of the target object (2) is created, characteristic image features of the target object (2) are established from the target image (22) and using the characteristic image features the effector emitter (8) of the effector unit (6) is aligned with the target object (2) by means of an alignment drive (10) controlled by a control unit (20) of the effector unit (6), wherein
- the effector emitter (8) comprises optics (14) by means of which a laser beam is directed onto the target object (2),
- target key points are established in the target image (22) as characteristic image features and at least one multi-dimensional target descriptor is established for each target key point, and the effector emitter (8) is aligned with the target object (2) using the positions of the target key points,
- a target point (18) on the target object (2) is established relative to target key points and the effector emitter (8) is aligned with the target point (18), wherein the target point (18) is set relative to reference key points of a reference image (24) of the target object (2), target key points in the target image (22) are associated with the reference key points on the basis of a comparison between target descriptors and reference descriptors, and the target point (18) is set relative to the target key points, and
- reference descriptors which were obtained from a plurality of reference images (24) of the target object (2) recorded from different directions are available, and the reference key points of the reference image (24) supplying the best comparison result are used for aligning the effector emitter (8) of the effector unit (6).

2. Method according to Claim 1,
wherein the target descriptors are compared with reference descriptors obtained from a reference image (24), the target object (2) is classified as identified in the case of a comparison result above a threshold, and the effector unit (6) is aligned with the target object (2).

3. Method according to Claim 1 or 2,
wherein a sequence of target images (22) is created, from which the target key points are established in each case, the target key points are tracked in the sequence of the target images (22) and the effector unit (6) is repositioned in accordance with a movement of the target key points through a landscape.

4. Method according to any of the preceding claims,
wherein a future position of a target point (18) at the target object (2) is calculated from the movement of the target object (2) that has already taken place.

5. Method according to Claim 4,
wherein the future position of the target point (18) is determined with the aid of a Kalman filter.

6. Method according to Claim 4 or 5,
wherein future positions of the target key points identified in target images (22) are determined with the aid of a Kalman filter, and a future position of the target point (18) is determined from these future positions.

7. Method according to any of the preceding claims,
wherein an image sequence (A-E) is assigned to the plurality of reference images (24), and the reference descriptors of at most two reference images (24) are used for comparison between target descriptors and reference descriptors.

8. Method according to Claim 7,
wherein only the reference image (24) with the best correlation result in the correlation that took place immediately therebefore and the next reference image (24) in the image sequence (A-E) are used for the descriptor comparison.

9. Effector unit (6) having optics (16), an effector emitter (8), by means of which energy to be deposited at a target object (2) can be emitted and which comprises optics (14) by means of which a laser beam can be directed onto the target object (2), an alignment drive (10) and a control unit (20), which is prepared to establish characteristic image features of the target object (2) from a target image (22) of a target object (2) and control the alignment drive (10) using the characteristic image features in such a way that the effector emitter (8) is aligned with the target object (2), wherein
the control unit (20) is prepared
- to establish target key points in the target image (22) as characteristic image features and at least one multi-dimensional target descriptor for each target key point, and to align the effector emitter (8) with the target object (2) using the positions of the target key points,
- to establish a target point (18) on the target object (2) relative to target key points and to align the effector emitter (8) of the effector unit (6) with the target point (18), wherein the target point (18) is set relative to reference key points of a reference image (24) of the target object (2), target key points in the target image (22) are associated with the reference key points on the basis of a comparison between target descriptors and reference descriptors, and the target point (18) is set relative to the target key points, and
- from a plurality of reference images (24) of the target object (2) recorded from different directions, from which reference descriptors were obtained and are available, to use the reference key points of the reference image (24) supplying the best comparison result for aligning the effector emitter (8) of the effector unit (6).

## Revendications

1. Procédé d'alignement d'un émetteur d'agent actif (8) d'une unité d'agent actif (6) sur un objet cible (2), par lequel une énergie à déposer sur l'objet cible (2) peut être émise, dans lequel une image cible (22) de l'objet cible (2) est créée, des caractéristiques d'image distinctives de l'objet cible (2) sont déterminées à partir de l'image cible (22), et l'émetteur d'agent actif (8) de l'unité d'agent actif (6) est aligné sur l'objet cible (2) en utilisant les caractéristiques d'image distinctives au moyen d'un mécanisme d'alignement (10) commandé par une unité de commande (20) de l'unité d'agent actif (6), dans lequel
- l'émetteur d'agent actif (8) comprend une optique (14) à travers laquelle un faisceau laser est dirigé vers l'objet cible (2),
- des points clés cibles dans l'image cible (22) sont déterminés comme étant des caractéristiques d'image distinctives et, pour chaque point clé cible, au moins un descripteur cible multidimensionnel est déterminé, et l'émetteur d'agent actif (8) est aligné sur l'objet cible (2) en utilisant les positions des points clés cibles,
- un point cible (18) sur l'objet cible (2) est déterminé par rapport à des points clés cibles, et l'émetteur d'agent actif (8) est aligné sur le point cible (18), le point cible (18) étant défini par rapport à des points clés de référence d'une image de référence (24) de l'objet cible (2), les points clés cibles dans l'image cible (22) étant associés à des points clés de référence sur la base d'une comparaison de descripteurs cibles avec des descripteurs de référence, et le point cible (18) étant défini par rapport aux points clés cibles, et
- des descripteurs de référence, obtenus à partir de plusieurs images de référence (24) de l'objet cible (2) acquises sous différents angles, sont disponibles, et les points clés de référence de l'image de référence (24) qui donne le meilleur résultat de comparaison sont utilisés pour aligner l'émetteur d'agent actif (8) de l'unité d'agent actif (6).

2. Procédé selon la revendication 1,
dans lequel les descripteurs cibles sont comparés à des descripteurs de référence obtenus à partir d'une image de référence (24), l'objet cible (2) est classé comme étant reconnu si le résultat de la comparaison est supérieur à une valeur de seuil, et l'unité d'agent actif (6) est alignée sur l'objet cible (2).

3. Procédé selon la revendication 1 ou 2,
dans lequel une séquence d'images cibles (22) est créée, à partir desquelles les points clés cibles sont déterminés, les points clés cibles sont suivis dans la séquence des images cibles (22), et l'unité d'agent actif (6) est asservie en fonction d'un mouvement des points clés cibles à travers un paysage.

4. Procédé selon l'une des revendications précédentes,
dans lequel une position future d'un point cible (18) sur l'objet cible (2) est calculée à partir du mouvement déjà effectué de l'objet cible (2).

5. Procédé selon la revendication 4,
dans lequel la position future du point cible (18) est déterminée à l'aide d'un filtre de Kalman.

6. Procédé selon la revendication 4 ou 5,
dans lequel des positions futures des points clés cibles reconnus dans les images cibles (22) sont déterminées à l'aide d'un filtre de Kalman, et une position future du point cible (18) est déterminée à partir de ces positions futures.

7. Procédé selon l'une des revendications précédentes,
dans lequel une séquence d'images (A-E) est associée aux multiples images de référence (24) et, pour une comparaison de descripteurs cibles avec des descripteurs de référence, les descripteurs de référence de deux images de référence (24) au maximum sont utilisés.

8. Procédé selon la revendication 7,
dans lequel, pour la comparaison des descripteurs, seule l'image de référence (24) donnant le meilleur résultat de corrélation dans la corrélation immédiatement précédente et l'image de référence suivante (24) dans la séquence d'images (A-E) sont utilisées.

9. Unité d'agent actif (6) comprenant une optique (16), un émetteur d'agent actif (8) par lequel une énergie pouvant être déposée sur un objet cible (2) peut être émise et qui comprend une optique (14) par laquelle un faisceau laser peut être dirigé vers l'objet cible (2), un mécanisme d'alignement (10) et une unité de commande (20) préparée pour déterminer des caractéristiques d'image distinctives de l'objet cible (2) à partir d'une image cible (22) de l'objet cible (2) et pour commander le mécanisme d'alignement (10) en utilisant les caractéristiques d'image distinctives de manière à aligner l'émetteur d'agent actif (8) sur l'objet cible (2), dans laquelle
l'unité de commande (20) est préparée pour
- déterminer comme étant des caractéristiques d'image distinctives des points clés cibles dans l'image cible (22) et, pour chaque point clé cible, au moins un descripteur cible multidimensionnel, et aligner l'émetteur d'agent actif (8) sur l'objet cible (2) en utilisant les positions des points clés cibles,
- déterminer un point cible (18) sur l'objet cible (2) par rapport à des points clés cibles et aligner l'émetteur d'agent actif (8) de l'unité d'agent actif (6) sur le point cible (18), le point cible (18) étant défini par rapport à des points clés de référence d'une image de référence (24) de l'objet cible (2), des points clés cibles dans l'image cible (22) étant associés à des points clés de référence sur la base d'une comparaison de descripteurs cibles avec des descripteurs de référence, et le point cible (18) étant défini par rapport aux points clés cibles, et
- utiliser, parmi plusieurs images de référence (24) de l'objet cible (2) acquises sous différents angles, à partir desquelles des descripteurs de référence ont été obtenus et sont disponibles, les points clés de référence de l'image de référence (24) qui donne le meilleur résultat de comparaison pour aligner l'émetteur d'agent actif (8) de l'unité d'agent actif (6).
